# EUROPEAN PATENT APPLICATION

(11) **EP 4 583 023 A1**
(43) Date of publication of application: **09.07.2025**
(21) Application number: 23859669.6
(22) Date of filing: 08.02.2023
(51) Int. Cl.: G06Q 10/0635

(54) **INCIDENT HANDLING SYSTEM AND INCIDENT HANDLING METHOD**

(30) Priority: 01.09.2022 JP 2022139130
(71) Applicant: Hitachi, Ltd., Tokyo 100-8280 (JP)
(72) Inventor: MORIBE Hirotaka, Tokyo 100-8280 (JP); IIJIMA Koichiro, Tokyo 100-8280 (JP); WATANABE Tohru, Tokyo 100-8280 (JP); HINOKI Ippei, Tokyo 100-8280 (JP)
(74) Representative: Strehl & Partner mbB
(86) International application number: PCT/JP2023/004268
(87) International publication number: WO 2024/047895

(57) **Abstract**

Provided are an incident response system and an incident response method that are able to generate and configure a processing workflow that includes a combination of external systems and individual processing components depending on the type of risk in order to respond to individual incidents. The incident response system, which responds to the individual incidents, includes a playbook DB, a playbook selection section, a workflow generation section, and a workflow engine section. The playbook DB stores processing workflows which are response flows for incidents of risks, as playbooks for individual types of risks. The playbook selection section acquires incident information regarding an incident that has occurred or appears to occur, and extracts a corresponding one of the playbooks that is appropriate for the incident from the playbooks created for the individual types of risks. The workflow generation section generates the processing workflows appropriate for the individual incidents in accordance with the extracted playbook. The workflow engine section outputs a process for the incident.

## Description

### Technical Field

The present invention relates to an incident response system and an incident response method.

### Background Art

Power transmission and distribution companies, which operate and manage various types of infrastructures, such as an electrical grid, are highly concerned about three risks: natural disasters, equipment failures, and cyber attacks. Specifically, these risks are natural disasters, which are becoming more severe due to global warming, multiple equipment failures due to the aging of power facilities, and sophisticated cyber attacks that have impacts beyond IT systems alone. New risks having impacts on wide ranges and areas and requiring cross-departmental responses in the event of such incidents have emerged.

In order to efficiently and promptly respond to incidents caused by the above-mentioned new risks, comprehensive and centralized risk management solutions are needed to cross-sectionally and effectively coordinate, direct, and supervise multiple relevant departments.

In connection with the above, Patent Document 1, which is related to SOAR (Security Orchestration, Automation and Response), that is, a comprehensive framework for incident response to cyber attacks, has proposed to focus on cyber attacks, turn countermeasures into workflows for work standardization purposes, and quickly respond to incidents. Patent Document 1 states that a workflow including procedures for responding to incidents expected to occur and processing scripts, such as API calls, is defined in a playbook in order to achieve work standardization and semi-automation of procedure execution.

### Prior Art Document

### Patent Document

Patent Document 1: U.S. Patent Application Publication No. 2021/0306352

### Summary of the Invention

### Problems to be Solved by the Invention

According to Patent Document 1, it is possible to achieve a certain level of effectiveness against cyber attacks. However, Patent Document 1 states that a specific incident caused by a cyber attack is responded to based on a static and fixed workflow defined in a playbook. Therefore, it is not possible to predefine all workflows for responding to individual incidents of a wide variety of risks other than cyber attacks.

This is because natural disasters include, for example, typhoons, floods, and wildfires and an external system holding information regarding individual incidents of such risks, the location of data handled by such an external system, and a processing program for processing such data vary from one risk incident to another. For example, components and simulators may be cited as the examples of the processing program.

Since there are countermeasures for many types of risks and many different situations, it is not possible to write a program with use of IF-THEN rules. This makes it impossible to define in advance all workflows appropriate for risk incidents to be considered.

The above-mentioned new risks have impacts on wide ranges and areas as described above. Therefore, conventional point solutions, which have been adopted by each business and department on an individual basis, do not provide adequate responses. Consequently, solutions for "promptly recovering from damage" and "maintaining achieved business KPIs" are required to respond to the above-mentioned new risks.

The present invention has been made in view of the above circumstances. An object of the present invention is to provide an incident response system and an incident response method that are able to generate and configure a processing workflow that includes a combination of external systems and individual processing components, depending on the type of risk, in order to respond to individual incidents.

### Means for Solving the Problems

In view of the above, according to an aspect of the present invention, there is provided an incident response system that responds to individual incidents. The incident response system includes a playbook DB, a playbook selection section, a workflow generation section, and a workflow engine section. The playbook DB stores processing workflows which are response flows for incidents of risks, as playbooks for individual types of risks. The playbook selection section acquires incident information regarding an incident that has occurred or appears to occur, and extracts a corresponding one of the playbooks that is appropriate for the incident from the playbooks created for individual types of risks. The workflow generation section generates the processing workflows appropriate for the individual incidents in accordance with the extracted playbook. The workflow engine section outputs a process for the incident.

According to another aspect of the present invention, there is provided an incident response method for responding to individual incidents, the incident response method includes storing processing workflows which are response flows for incidents of risks, as playbooks for individual types of risks, acquiring incident information regarding an incident that has occurred or appears to occur, and extracting a corresponding one of the playbooks that is appropriate for the incident from the playbooks created for individual types of risks, generating the processing workflows appropriate for the individual incidents in accordance with the extracted playbook, and outputting a process for the incident.

### [Advantage of the Invention]

According to the present invention, a wide variety of risks having impacts on wide ranges and areas and requiring a complicated cross-departmental response in the event of incidents can be responded to in a centralized and comprehensive manner.

### Brief Description of the Drawings

FIG. 1 is a diagram illustrating processing functions of an incident response system according to an embodiment of the present invention.
FIG. 2 is a diagram summarizing processes performed in a preparatory stage for system construction.
FIG. 3 is a diagram summarizing the processes performed in an actual response stage in the event of incidents.
FIG. 4 is a diagram illustrating a hardware configuration of a computing device.
FIG. 5 is a flowchart illustrating details of the processing performed by an arithmetic section of the computing device.
FIG. 6 is a diagram illustrating details of the processing that is performed by the incident response system 1 in the event of a typhoon.
FIG. 7 is a diagram illustrating an example of an electrical grid that is operated and managed by a power transmission and distribution company.
FIG. 8 is a diagram summarizing the relation between input In and output Out of each component.
FIG. 9 is a diagram illustrating an example of a playbook for a typhoon.

### Modes for Carrying Out the Invention

Embodiments of the present invention will now be described with reference to the accompanying drawings.

### [First Embodiment]

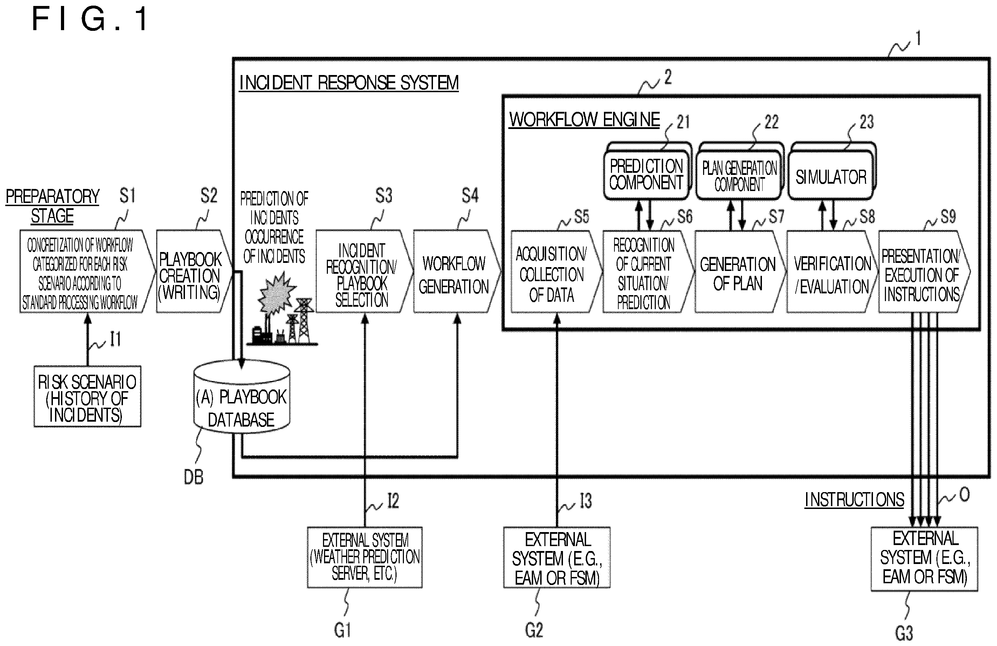

An incident response system according to an embodiment of the present invention is implemented by use of a computing device. An incident response system 1 according to the embodiment of the present invention illustrated in FIG. 1 is defined in terms of processing function blocks that represent the details of processes performed by an arithmetic section of the computing device. It should be noted that, although the following example depicts a case where an electrical grid is operated and managed, the scope of application of the present invention is not limited to electrical grids.

The incident response system 1 depicted in FIG. 1 deals with multiple risks, such as natural disasters, equipment failures, and cyber attacks, and responds to individual incidents in the risks. A risk indicates, for example, a typhoon in the case of a natural disaster. An incident indicates, for example, Typhoon No. 15.

The incident response system 1 acquires various inputs I (I1, I2, I3) from the outside, and outputs an instruction output O as a result of internal processing. The processing performed in this instance includes a process performed in a preparatory stage for system construction and a process performed in an actual response stage in the event of incidents. First, the process performed in the preparatory stage for system construction will be described below.

Described with reference to FIG. 1, in processing step S1, which is the processing in the preparatory stage for system construction, a typical workflow categorized according to a standard processing workflow is created for each risk scenario in reference to a response history I1 at the time of incident occurrence in the past. In processing step S2, a playbook describing a response workflow for a relevant risk incident by categorizing it as the standard processing workflow is created, and stored in a playbook database DB.

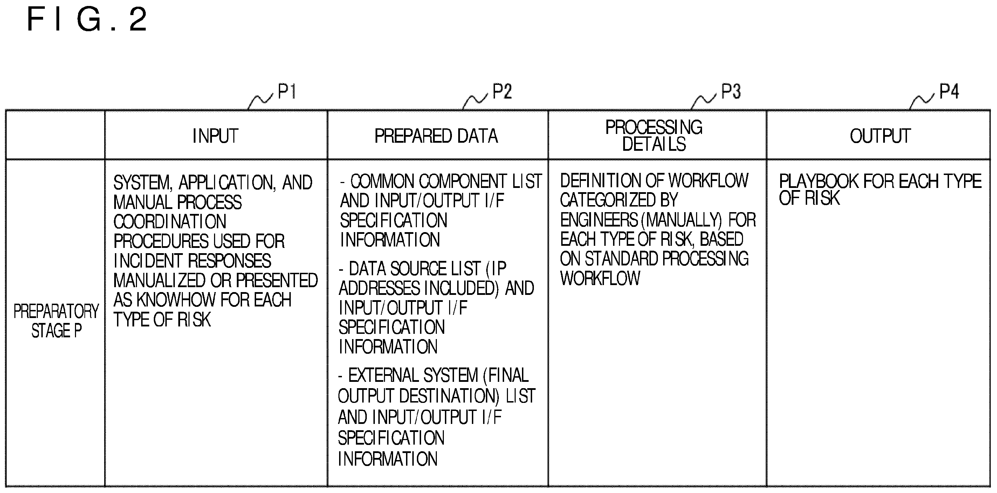

FIG. 2 is a diagram summarizing the processes performed in the preparatory stage for system construction. FIG. 2 lists the specific contents of an input P1 obtained from the outside in the preparatory stage for system construction, internal data P2 prepared in advance, processing details P3, and an output P4 in the preparatory stage for system construction. As described with respect to the input P1, system, application, and manual process coordination procedures used for incident responses manualized or tacitly known (knowhow) for each type of risk are inputted in the preparatory stage for system construction.

As described with respect to the internal data P2 prepared in advance, for example, a list of common components and input/output I/F specification information, a list of data sources (including IP addresses) and input/output I/F specification information, and a list of external systems (final output destinations) (including IP addresses) and input/output I/F specification information are stored. This ensures the connectivity between the common components, data sources, and external systems (final output destinations), builds a communication system that makes necessary information available instantly, and facilitates data sharing.

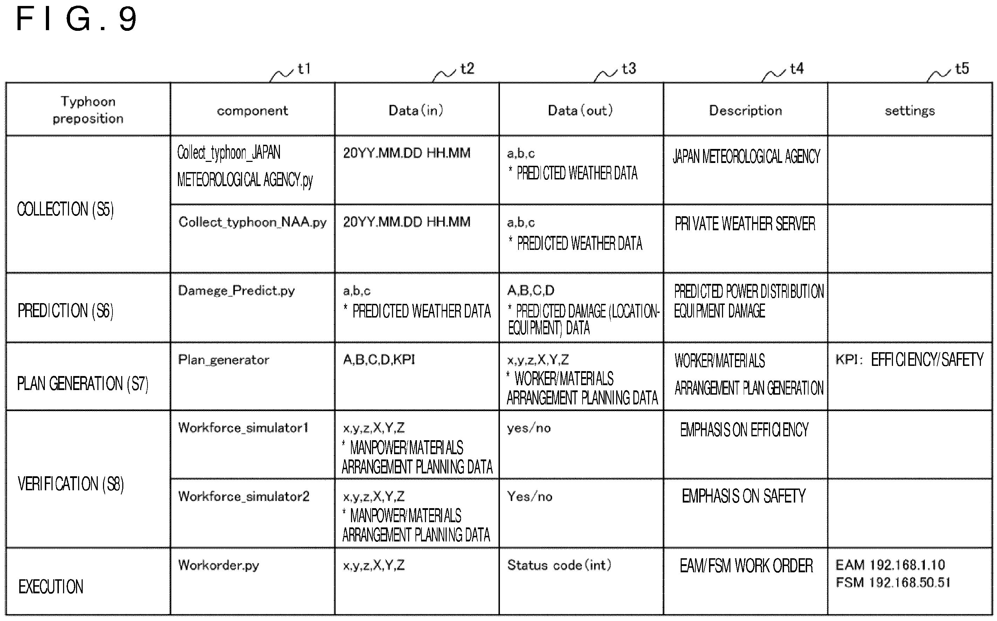

As described with respect to the processing details P3, an engineer defines a workflow categorized based on the standard processing workflow for each type of risk, and as described with respect to the output P4, the playbook database DB for each type of risk is created. A specific example of the playbook will be described later with reference to FIG. 9, and input/output data and components are prepared for each stage of the workflow.

In the preparatory stage for system construction, the standard processing workflow for responding to incidents which is obtained from past cases is defined. The standard processing workflow has five stages. In the first stage, the necessary information is acquired/collected from an appropriate external system according to the type of risk. In the second stage, the current situation is recognized or damage is predicted from the acquired/collected information. In the third stage, a necessary response plan is generated based on the current situation recognized and prediction. In the fourth stage, the generated response plan is verified/evaluated in advance by determining whether it is appropriate and feasible, and determining whether the response described in the response plan will not cause unexpected effects. In the fifth stage, instructions are executed based on the verified/evaluated response plan. The processing is performed according to the above-described workflow.

The above-described workflow is created for each risk of natural disasters, equipment failures, and cyber attacks, and is called the standard processing workflow because it can be operated as a standard according to common past incident cases.

Meanwhile, in real incident scenes, the standard processing workflow can be used as a reference; however, an optimized workflow should be created according to individual circumstances. For this reason, in the preparatory stage, a playbook describing a response workflow for a relevant risk incident which is based on the combination of external systems and individual processing components is created in advance for each type of risk by categorizing it as the standard processing workflow, and stored. That is, a template patterned based on type is provided.

The processing performed in the actual response stage in the event of incidents will now be described.

As regards the processing performed in the actual response stage in the event of incidents, the incident response system 1 initially performs processing step S3. The incident response system 1 first acquires incident occurrence information I2 from an external system **G1.** The incident occurrence information I2 may be incident occurrence prediction information. Subsequently, the incident response system 1 refers to the playbook database DB to examine a plurality of risks, and selects a playbook that is appropriate for a risk associated with the incident occurrence information. In the present example, the risk is a natural disaster, and it is assumed that the incident is the occurrence of a typhoon. In the case of a typhoon, the external system G1 is a weather forecast server, for example, of the Japan Meteorological Agency.

Next, in processing step S4, a workflow for current occurrence of a typhoon is generated. This workflow is, for example, used to formulate an asset management plan that indicates how a power transmission and distribution company for operating and managing an electrical grid should utilize assets owned by the power transmission and distribution company, in order to respond to the approach and passage of the typhoon and subsequently suffered or anticipated damage. The assets indicate, for example, infrastructure facilities and infrastructure management personnel. This workflow is formulated to set various stages for each risk, i.e., an information collection stage, a prediction stage, a plan generation stage, a verification/evaluation stage, and an instruction stage, and define the task to be performed in the individual stages for each risk.

When preconditions or priority goals are given at the time of workflow generation, the processing components in the workflow or the processing conditions of each processing component are changed. The priority goals are a set of goals that an infrastructure operator should prioritize, and are, for example, KPIs. The processing components may be, for example, a plan generator and a verification simulator. The processing conditions include, for example, the setting conditions and calculation conditions of the incident response system.

Subsequently, the incident response system 1 causes a workflow engine 2 to execute the workflow in the current example while referring to the generated workflow, and outputs to the outside an asset management plan suitable for the current incident.

Hence, the workflow engine 2 has components, that is, a prediction component 21, a plan generation component 22, and a simulator component 23, acquires assets deployable as a current incident countermeasure and their details from an external system G2, and finally delivers the instruction output O to an external system G3 in order to indicate available assets and their allocation details (where, what, and how much to deploy). It should be noted that these components 21, 22, and 23 are provided for each type of risk, and that the corresponding components 21, 22, and 23 are selected and used appropriately for a risk. Although the current example indicates that the components 21, 22, and 23 are referred to only in processing steps S6, S7, and S8, the components may additionally be referred to in processing steps S5 and S9 as well.

The external systems G2 and G3 are either an EAM (Enterprise Asset Management) system or an FSM (Field Service Management) system. The EAM system manages business assets. The FSM system manages workers. Here, the equipment and workers managed by the EAM and FSM systems are collectively referred to as the assets in some cases.

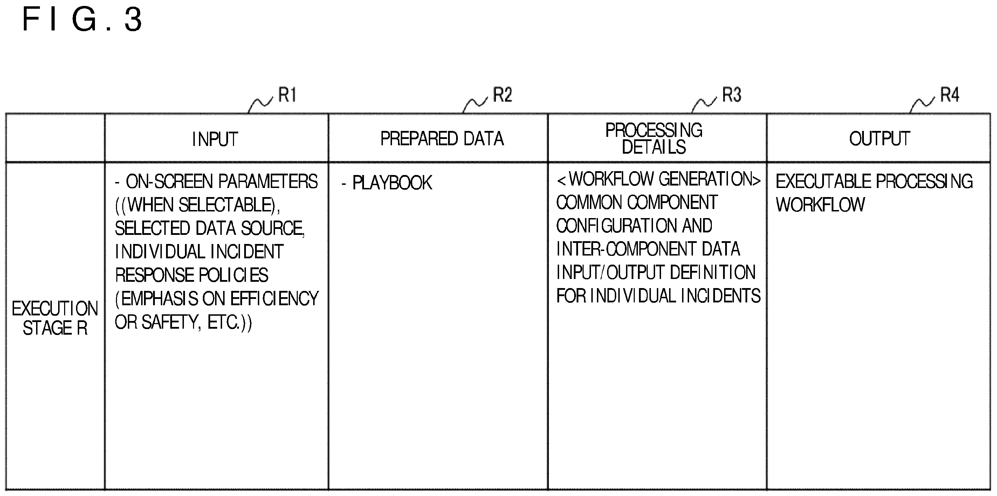

FIG. 3 is a diagram summarizing the processes performed in the actual response stage in the event of incidents. FIG. 3 lists the specific contents of an input R1 obtained from the outside in the actual response stage R, internal data R2 prepared in advance, processing details R3, and an output in the final preparatory stage (= an input in the actual response stage) R4. Accordingly, in the actual response stage, on-screen parameters, selected data sources (when selectable), and individual incident response policies (e.g., emphasis on efficiency or emphasis on safety) are inputted as indicated under the input R1.

Further, the playbook database DB created in an advance preparation stage is owned as indicated under the internal data R2, which is prepared in advance. Moreover, a common component configuration and an inter-component data input/output definition for individual incidents are defined in workflow generation as indicated under the processing details R3. Further, an executable processing workflow is outputted as indicated under the output (= an output in the actual response stage) R4.

In processing step S5 in FIG. 1, necessary information is acquired/collected from appropriate external systems G1 and G2 according to the type of risk. The acquired/collected information should include a wide range of information, such as meteorological information regarding the path and size of a present typhoon in the case of a typhoon, assets deployable as the countermeasure against the typhoon and their details, or locations where and preconditions under which damage occurred in the case of a plurality of past typhoons.

In processing step S6, the natural disaster (typhoon) prediction component 21 is referenced to recognize the current situation or predict damage in the current typhoon case from the acquired/collected information. In processing step S7, the natural disaster (typhoon) plan generation component 22 is referenced to generate a necessary response plan according to a current situation recognition and prediction. This indicates that a response measure is formulated with use of currently available equipment and human assets. In processing step S8, the natural disaster (typhoon) simulator component 23 is referenced to verify/evaluate in advance whether the generated response plan is appropriate and feasible and will not cause unexpected effects. In processing step S9, the instructions are executed in accordance with the verified/evaluated plan.

It can be said that the mechanism for processing in the actual response stage in the event of incidents can be summarized as having relevant processing blocks as the standard processing workflow based on the processes including a data acquisition/collection stage, a prediction stage, a plan generation stage, a verification/evaluation stage, and an instruction stage, and includes a playbook describing, for each type of risk, a processing workflow for generating a response to a relevant risk incident which is based on the combination of external systems and individual processing components, by categorizing the processing workflow based on the standard processing workflow, and a function for generating a workflow (= a combination of processing blocks) appropriate for an individual incident in accordance with the playbook.

Further, it can be said that, when the preconditions or the priority goals are given at the time of workflow generation, the processing components in the workflow or the processing conditions of each processing component are changed.

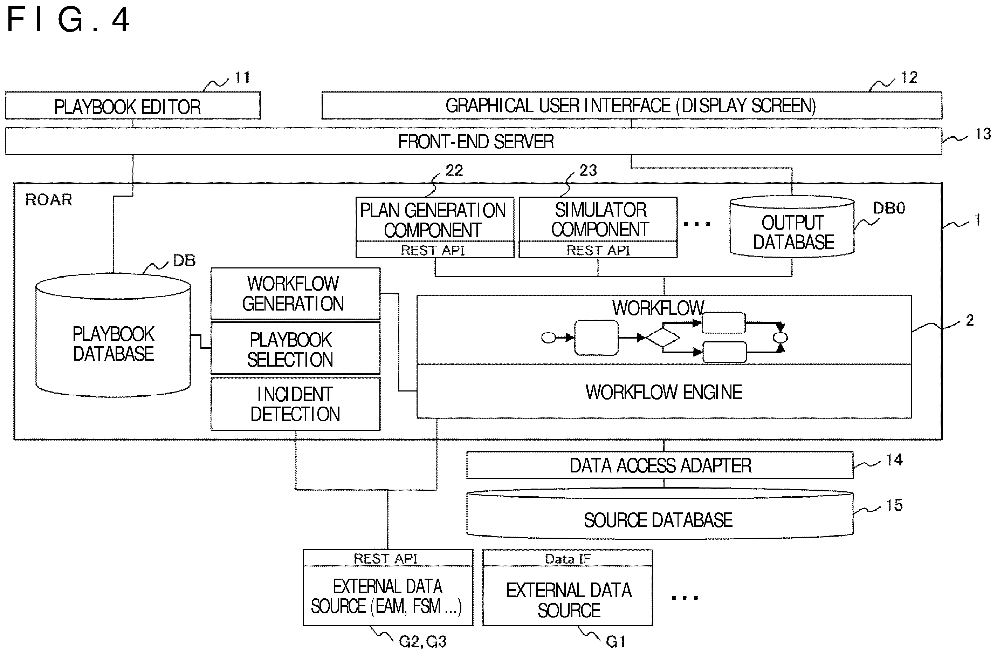

In FIG. 1, which depicts a first embodiment, the details of the processing performed by the arithmetic section of the computing device are depicted as the processing function blocks. However, when a hardware configuration is to be depicted, it is preferable that the configuration illustrated in FIG. 4 be used.

In the above case, the computing device 1 internally includes the playbook database DB and an output database DB0 as storage sections, and has the plurality of components 22 and 23 and the workflow engine 2. The computing device also has an incident detection function, a playbook selection function, and a workflow generation function.

Further, mainly for playbook editing, the computing device is connected to a playbook editor 11 and a graphical user interface 12 through a front-end server 13. Furthermore, the computing device is connected to external data sources G1, G2, and G3 directly or through a data access adapter 14 and a source database 15.

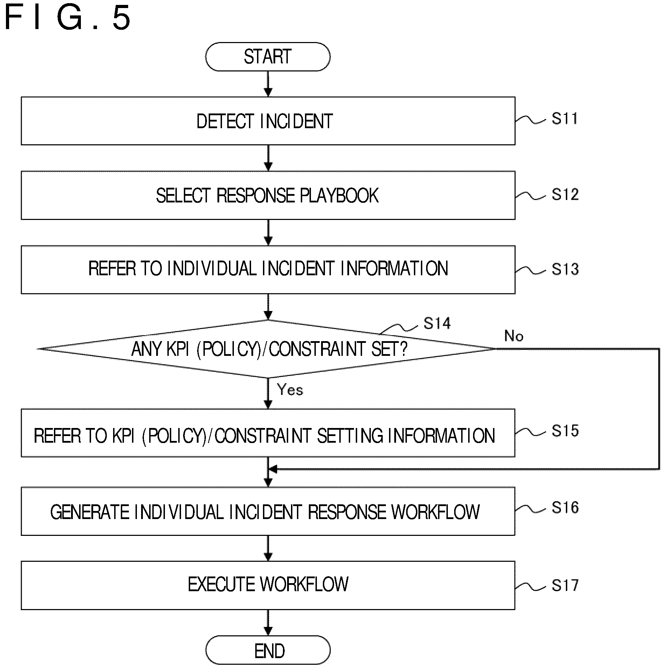

While FIG. 1 depicts the details of the processing performed by the arithmetic section of the computing device in the form of the processing function blocks, FIG. 5 uses a flowchart to describe the details of the processing performed by the arithmetic section of the computing device.

First, in processing step S11, an incident is detected. In this instance, the incident is recognized by use of an event occurrence notification received from a predefined connection destination or by ensured communication (polling). In processing step S12, an appropriate playbook is selected according to the connection destination/notification content.

In processing step S13, Typhoon No. 15/date and time are designated, for example, from the GUI side, and the designation of a destination server (Japan Meteorological Agency) is acquired, so that individual incident information can be referred to.

In processing step S14, it is checked whether the preconditions/constraints or the priority goals (KPIs) are set at the time of workflow generation. If they are set, KPI information or constraint/setting information is referenced in processing step S15. Subsequently, in processing step S16, an individual incident response workflow is generated. In processing steps S17 and subsequent steps, the workflow is executed.

The above-described processing according to the present invention ensures that a wide variety of risks requiring cross-departmental or otherwise complicated responses and having impacts on wide ranges and areas in the event of incidents are responded to in a centralized and comprehensive manner.

### [Second Embodiment]

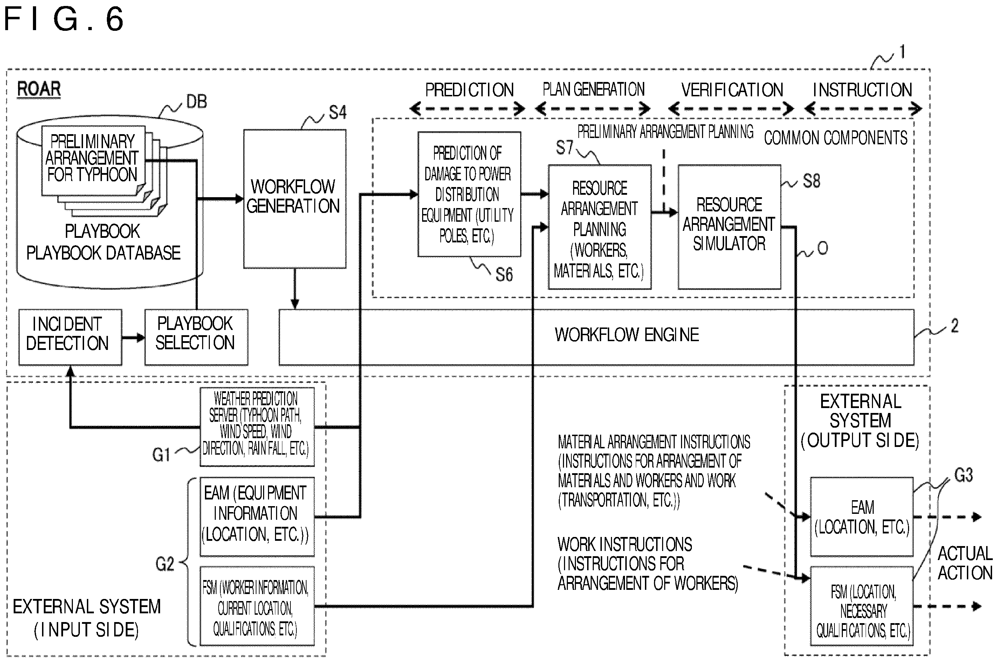

In a second embodiment of the present invention, a specific example will be described with reference to the details of processing performed by the incident response system 1 in the event of a typhoon. In the event of a typhoon depicted in FIG. 6, the incident response system 1 initially acquires information indicating the state of an approaching typhoon, such as the path, wind speed, wind direction, and rainfall, from the weather forecast server of the external system G1.

Accordingly, a process of detecting an incident and selecting a playbook is performed, and the playbook database DB for each type of risk is referenced. In processing step S4, the response workflow is generated from the playbook for typhoons, which are natural disasters.

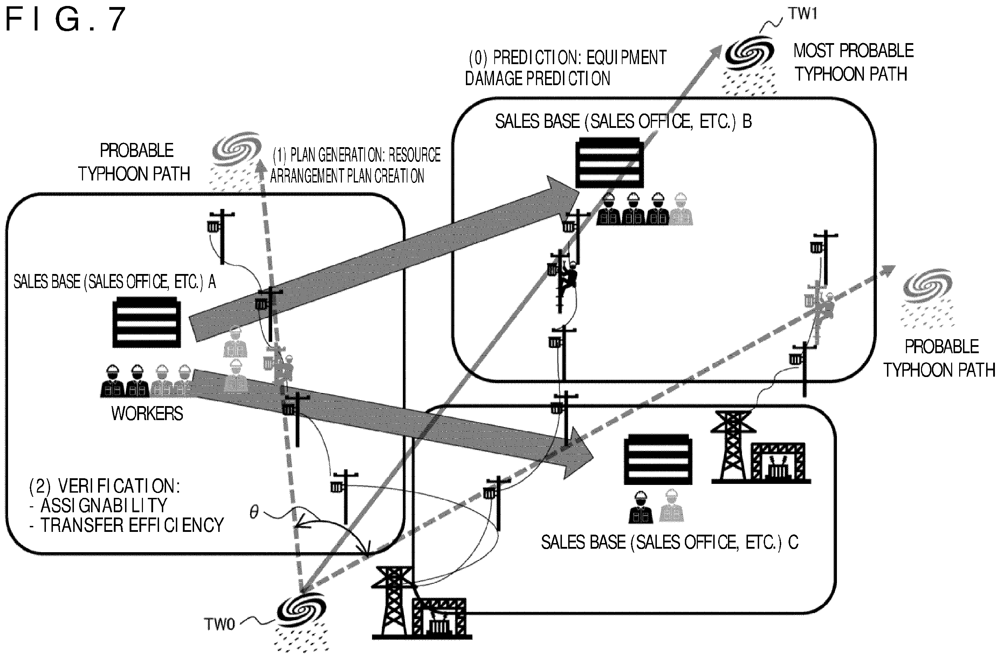

FIG. 7 is a diagram illustrating an example of an electrical grid that is operated and managed by a power transmission and distribution company. Electricity is supplied from power plants to individual consumers through substations via transmission and distribution lines. The area of management of such an electrical grid is defined for each of individual sales bases A, B, and C of the power transmission and distribution company. Workers at each of sales bases A, B, and C usually manage and maintain transmission and distribution equipment (e.g., utility poles and pole-mounted transformers) within their own management area.

Incidentally, it is predicted that a current typhoon TW0 will pass through an electrical grid area operated and managed by the relevant power transmission and distribution company. Further, a predicted area of typhoon passage is within the angle θ. However, it is predicted that the typhoon TW0 is most likely to move in a direction TW1, which is the direction of the areas managed by sales bases B and C.

In the above-described situation, the damage to power distribution equipment is predicted in processing step S6, which represents the prediction stage of the incident response system 1 depicted in FIG. 6. The result of such prediction indicates that, for example, the damage to power facilities will be greater in the direction TW1 in which the typhoon is predicted most likely to move.

Next, in processing step S7, which is a planning stage of the incident response system 1 depicted in FIG. 6, a resource arrangement plan is generated for assets owned by the relevant power transmission and distribution company. The generated plan indicates that sales bases B and C have difficulty in responding within the scope of their own managed assets and need asset assistance from sales base A as support from other sales bases.

Finally, in processing step S8, which is a verification stage of the incident response system 1 depicted in FIG. 6, it is verified, for example, whether the asset assistance can in practice be provided from sales base A as the support from the other sales bases or whether transfer efficiency is sufficiently high. In this instance, it is also considered that a standby for response in sales base A is required.

Eventually, the instruction output O according to the above verification result is delivered to the external system G3. The instructions included in the instruction output O are material arrangement instructions regarding the arrangement of materials and workers and the work (transportation) or work instructions regarding the arrangement of workers.

As described above with reference to FIG. 7, the flow of preliminary arrangement for a typhoon performed by the incident response system 1 is depicted here. For the preliminary arrangement for the typhoon, the incident response system 1 predicts, before the arrival of the typhoon, the damage, for example, to the power distribution equipment that may be caused by the typhoon ((0) in FIG. 7), and formulates a preliminary arrangement plan for arranging the workers and the materials at appropriate bases ((1) in FIG. 7). The appropriateness of the preliminary arrangement plan is verified, for example, by use of a simulator ((2) in FIG. 7), then instructions are given to the external systems such as the EAM and FSM systems that manage the workers and the materials, and the "preliminary arrangement" is executed at an appropriate point in time.

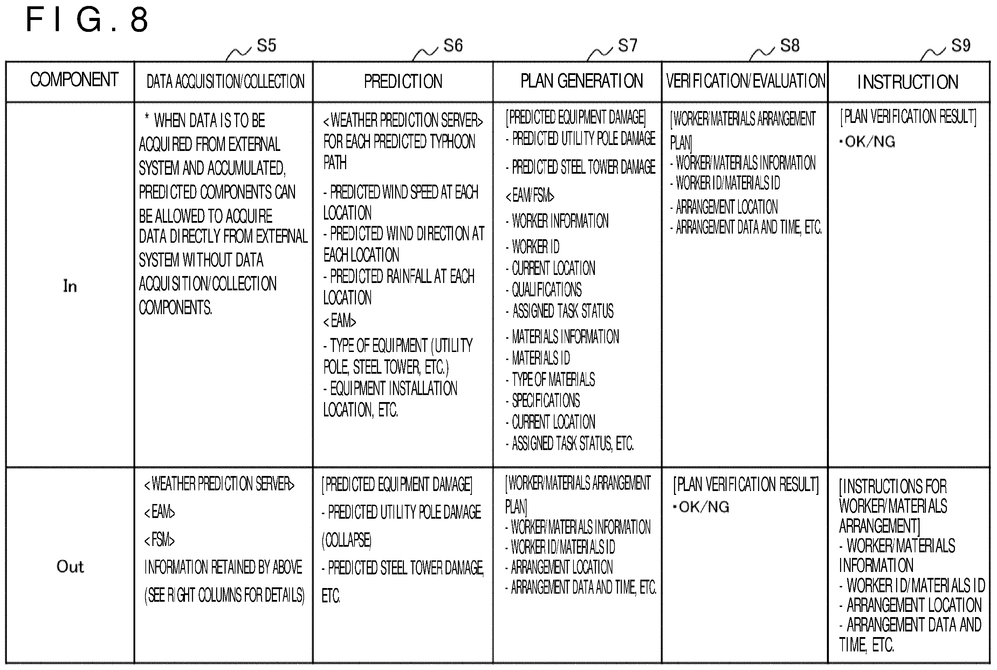

FIG. 8 summarizes examples of inputs In and outputs Out between the components depicted in FIG. 1. First, the components in processing step S5 for data acquisition/collection may be configured such that, when data is to be acquired from an external system and accumulated, the prediction component directly acquires the data from the external system without using a data acquisition/collection component. The output Out is information owned by the weather forecast server and the EAM and FSM systems.

The components in processing step S6 for prediction are, for example, wind speed predictions, wind direction predictions, and rainfall predictions regarding individual locations and each typhoon path prediction, which are received from the weather forecast server as the input In, and information regarding, for example, the types of equipment (e.g., utility poles and steel towers) and equipment installation locations is acquired from the EAM system. Further, as the output Out, for example, utility pole damage (collapse) predictions and steel tower damage predictions are given as equipment damage predictions.

The components in processing step S7 for plan generation are, for the input In, the equipment damage predictions, that is, utility pole damage predictions and steel tower damage predictions, and the EAM and FSM system information, that is, worker information (worker ID, current location, qualifications, and assigned task status) and materials information (e.g., materials ID, materials type, specifications, current location, and assigned task status), and for the output Out, information regarding a worker/materials arrangement plan, that is, worker/asset information (e.g., worker ID/asset ID, arrangement location, and arrangement date and time).

The components in processing step S8 for verification/evaluation are, for the input In, the information regarding the worker/materials arrangement plan, that is, the worker/asset information (e.g., worker ID/asset ID, arrangement location, and arrangement date and time), and for the output Out, a plan verification result, which is either Good or No Good.

The components in processing step S9 for instruction are, for the input In, the plan verification result, which is either Good or No Good, and for the output Out, worker/materials arrangement instructions, that is, worker/asset information (e.g., worker ID/asset ID, arrangement location, and arrangement date and time).

In the description of the second embodiment, the case of a typhoon is used as an example. However, it is obvious that an appropriate incident response can also be made to other risks when the inputs and processing details are properly adjusted for the other risks.

FIG. 9 is a diagram illustrating an example of the playbook for a typhoon. The vertical axis indicates the data acquisition/collection stage (S5), the prediction stage (S6), the plan generation stage (S7), the verification/evaluation stage (S8), and an execution stage, whereas the horizontal axis indicates, for example, components t1, input data t2, output data t3, special notes t4, and setting information t5 in each of the above-mentioned stages.

Additionally, Collect_typhoon_Japan Meteorological Agency.py and Collect_typhoon_NAA.py are the names of components used in the collection stage, predict.py is the name of a component used in the prediction stage, Plan_generator is the name of a component used in the planning stage, workforce_simulator1 and workforce_simulator2 are the names of components used in the verification stage, and Workorder.py is the name of a component used in the execution stage.

Hence, an example of the workflow to be generated is one that is executed in the order of Collect_typhoon_Japan Meteorological Agency.py, predict.py, Plan_generator, orkforce_simulator2, and Workorder.py. It should be noted that similar workflows are also set for the other risks according to a similar concept.

A basic concept described in conjunction with the first embodiment can be summarized as follows when FIG. 6 is referenced as the case of a typhoon. In this instance, the playbook appropriate for preliminary arrangement for the typhoon is initially defined in a concept verification stage for the preliminary arrangement for the typhoon.

The above-mentioned playbook describes a workflow template for executing the preliminary arrangement for the typhoon, which includes components that predict damage, generate an arrangement plan for workers and materials according to damage predictions, and verify the generated arrangement plan.

In accordance with the playbook, a workflow generation processing block acquires information relevant to individual incidents from weather information servers and EAM and FSM and other external systems that manage the workers and the materials, and generates workflows that include the transfer of data.

The generated workflows are executed sequentially by the workflow engine (orchestrator), and finally, instructions are issued to the EAM and FSM systems to implement an operational process for the preliminary arrangement for the typhoon.

A damage prediction component predicts damage to the power distribution equipment in reference to various kinds of meteorological data concerning wind direction, wind speed, and accumulated rainfall.

A resource allocation planning component formulates a plan for making the preliminary arrangement by moving resources, such as the workers and the materials, from one base to another in reference to the damage predictions.

A verification component uses a simulator to evaluate/verify the feasibility and appropriateness of the formulated plan.

If no problem is indicated by the result of verification, instructions are issued, for example, as work orders, to the EAM and FSM systems or other external systems that manage the workers and the materials, and the "preliminary arrangement" is executed at an appropriate point in time.

The components included in a processing workflow generated from a playbook may change depending, for example, on given KPIs. For example, it is conceivable that simulators used for verification/evaluation may have different judgment viewpoints (weightings), and verify whether more than sufficient resources are provided by the plan or verify from the perspective of cost.

It should be noted that the components may change depending on a designated location. For example, in a case where the designated location is changed, not only the predicted damage to the electrical grid changes, but also an emphasized point changes depending on the characteristics of an area, such as an urban area, an industrial area, a suburban area, and a rural area. The components also change depending on the context.

For example, since it is possible that the calculation logic for formulating the preliminary arrangement plan may vary, the components for planning may change depending on a relevant area. For example, in a case where many utility poles are likely to fall, careful preliminary arrangements should be made. If the relevant area is important, careful preliminary arrangements should also be made even in a case where the utility poles are not likely to fall.

### Description of Reference Symbols

- 1:: Incident response system
- 2:: Workflow engine
- 21:: Prediction component
- 22:: Plan generation component
- 23:: Simulator component
- DB:: Playbook database
- G1, G2, G3:: External system

## Claims

1. An incident response system that responds to individual incidents, the incident response system comprising:
a playbook database that stores processing workflows as playbooks for individual types of risks, the processing workflows being response flows for incidents of risks;
a playbook selection section that acquires incident information regarding an incident that has occurred or appears to occur, and extracts a corresponding one of the playbooks that is appropriate for the incident from the playbooks created for the individual types of risks;
a workflow generation section that generates the processing workflows appropriate for the individual incidents in accordance with the extracted playbook; and
a workflow engine section that outputs a process for the incident.

2. The incident response system according to claim 1,
wherein the workflow engine section includes
a current situation/prediction section that acquires the incident information regarding an incident that has occurred or appears to occur, predicts damage, and extracts the playbook appropriate for the incident according to the damage and the type of the incident,
a plan generation/evaluation section that, in accordance with the extracted playbook, generates the processing workflows appropriate for the individual incidents, creates response plans according to the processing workflows, and evaluates whether the generated response plans are feasible, and
an instruction/execution section that outputs the response plans for the incidents according to the evaluation.

3. The incident response system according to claim 1,
wherein the playbook includes weighted information regarding priority goals for a risk.

4. The incident response system according to claim 1,
wherein the workflow engine section holds individual processes in the processing workflows as processing blocks.

5. The incident response system according to claim 1,
wherein the processing workflows include, for each incident, a prediction stage, a planning stage, and a verification/evaluation stage.

6. The incident response system according to claim 5,
wherein the processing workflows further include a data collection stage and an instruction stage.

7. The incident response system according to claim 1,
wherein, when generating the processing workflows appropriate for the individual incidents, the workflow generation section changes preconditions or priority goals that are to be used for individual processes in the processing workflows.

8. The incident response system according to claim 4,
wherein, when generating the processing workflows appropriate for the individual incidents, the workflow generation section changes processing conditions that are set for the processing blocks.

9. The incident response system according to claim 1,
wherein, when the playbook is to be created in advance for each type of risk in order to describe the processing workflow for generating a response to a relevant risk incident by categorizing the processing workflow based on a standard processing workflow and stored in the playbook database, the playbook is created with reference to a plurality of incidents in the past.

10. An incident response method for responding to individual incidents, the incident response method comprising:
storing processing workflows as playbooks for individual types of risks, the processing workflows being response flows for incidents of risks;
acquiring incident information regarding an incident that has occurred or appears to occur, and extracting a corresponding one of the playbooks that is appropriate for the incident from the playbooks created for the individual types of risks;
generating the processing workflows appropriate for the individual incidents in accordance with the extracted playbook; and
outputting a process for the incident.

11. The incident response method according to claim 10, further comprising:
in order to output the process for the incident,
acquiring incident information regarding an incident that has occurred or appears to occur, predicting damage, and extracting the playbook appropriate for the incident according to the damage and the type of the incident;
generating the processing workflows appropriate for the individual incidents in accordance with the extracted playbook, creating response plans according to the processing workflows, and evaluating whether the generated response plans are feasible; and
outputting the response plans for the incidents according to the evaluation.

12. The incident response method according to claim 10,
wherein the playbook includes weighted information regarding priority goals for a risk.

13. The incident response method according to claim 10,
wherein, when the processing workflows appropriate for individual incidents are to be generated, preconditions or priority goals to be used for the individual processes in the processing workflows are changed.
